Europäisches Patentamt

European Patent Office

Office européen des brevets

(19)

(11) Veröffentlichungsnummer: **0 004 852**
B1

(12) EUROPÄISCHE PATENTSCHRIFT

(45) Veröffentlichungstag der Patentschrift:
12.05.82

(51) Int. Cl.³: **G 06 K 9/00**, G 06 K 9/22,
G 06 K 7/10, H 04 N 1/024

(21) Anmeldenummer: 79100366.8

(22) Anmeldetag: 08.02.79

(54) Einrichtung zum Abtasten von Mustern mit einer geregelten Lichtquelle.

(30) Priorität: 14.04.78 DE 2816325

(43) Veröffentlichungstag der Anmeldung:
31.10.79 Patentblatt 79/22

(45) Bekanntmachung des Hinweises auf die Patenterteilung:
12.05.82 Patentblatt 82/19

(84) Benannte Vertragsstaaten:
BE CH FR GB IT NL

(56) Entgegenhaltungen:
DE-A-2 747 450
FR-A-2 069 297
FR-A-2 318 465
LU-A-60 634
US-A-3 944 979
IBM TECHNICAL DISCLOSURE BULLETIN
Jahrgang 15, Nr. 1, Juni 1972,
ARMONK (US)

(73) Patentinhaber: COMPUTER GESELLSCHAFT
KONSTANZ MBH, Max-Strohmeyer-Strasse 116,
D-7750 Konstanz (DE)

(72) Erfinder: Haupt, Gerhard, Mittelweg 38, D-7750 Konstanz
(DE)

(74) Vertreter: Mehl, Ernst, Dipl.-Ing., Postfach 22 01 76,
D-8000 München 22 (DE)

R. BRAUN u. a.: »Automatic Light
Intensity Control for Optical Sensing«,
Seiten 276 bis 277
IBM TECHNICAL DISCLOSURE BULLETIN
Jahrgang 18, Nr. 8, Januar 1976,
ARMONK (US)
F. BEALLE u. a.: »Low-Noise Amplifier«,
Seiten 2458 bis 2459

Einrichtung zum Abtasten von Mustern mit einer geregelten Lichtquelle

Die Anmeldung bezieht sich auf eine Einrichtung zum Abtasten von Mustern mit einer Lichtquelle gemäß dem Oberbegriff des Hauptanspruches.

Derartige Abtasteinrichtungen werden bei der automatischen Zeichenerkennung angewendet, um visuell lesbare Ziffern oder Buchstaben eines Aufzeichnungsträgers, z. B. eines Beleges, eines Briefes oder auch eines Etikettes direkt in eine maschinell auswertbare Form umzusetzen und sie zur weiteren Verarbeitung einer datenverarbeitenden Anlage zuzuführen.

Eine als Handgerät ausgebildete Leseeinrichtung, deren Sensorfläche aus mehreren Fotoelementen besteht, ist z. B. aus der FR-A-2 318 465 vorbekannt.

Ferner ist aus der DE-A-2 534 235 eine optische Abtasteinrichtung bekannt, bei der als Sensorfläche eine Fotodiodenzeile mit eingebautem Abfrageschieberegister verwendet wird. An dieses ist über einen Integrator ein Analog-Digital-Wandler angeschlossen, dessen Ausgangssignale digitalisierte Bildsignale darstellen. Diese Signale sind durch Unterschiede in der Elektronenausbeute der einzelnen Fotodioden in den lichtempfindlichen Flächen der Fotodioden, durch Inhomogenitäten der Beleuchtung und andere systematische Fehler verfälscht. Die Fehler müssen daher vor weiterer Verarbeitung der Bildsignale in einer Erkennungseinrichtung erst eliminiert werden. Bei der bekannten Einrichtung wird für die Simulation eines Eichnormals der weiße Hintergrund der Lesezone eines abzutastenden Aufzeichnungsträgers direkt benutzt. Diese gleichmäßige Oberfläche wird zur Gewinnung von Korrekturwerten für die Bildsignale abgetastet. Aus den so erzeugten, fälschlich voneinander abweichenden Abtastsignalen wird durch einen individuellen Vergleich mit einem Sollwert ein jeweils einer bestimmten Fotodiode zugeordneter Korrekturwert berechnet. Bei der bekannten Anordnung ist zusätzlich ein Grauwertspeicher vorgesehen, der die abgetasteten digitalisierten Bildsignale so lange zwischenspeichert, bis eine erste Berechnung der Korrekturwerte durchgeführt ist.

Daraus ergibt sich folgendes Bild: In einem Zeichenerkennungsgerät muß der zu lesende Aufzeichnungsträger beleuchtet werden. Die jeweils remittierte Helligkeit aus dem Abtastfeld des Aufzeichnungsträgers wird über eine Optik auf eine Sensorfläche abgebildet, die diese Helligkeit in elektrische Signale umwandelt. Die Schwankung der remittierten Helligkeit rührt nun einerseits von den Zeichen auf dem Aufzeichnungsträger her und enthält die gewünschte Information. Andererseits enthält sie aber durch Störfaktoren unerwünschte Information, die durch Alterung der Beleuchtung und durch wechselnden Remissionsgrad des Untergrundes u. ä. hervorgerufen wird.

Aus der US-PS 3 517 167 ist bereits ein Regelsystem für die Lichtquelle einer optischen Leseeinrichtung bekannt, bei der das reflektierte, von einem einzigen Fotoelement empfangene Licht bzw. der entsprechende Fotostrom mit einer Sollgröße verglichen und das resultierende Vergleichssignal als Regelstöße für die Lampenspannung verwendet wird. Bei dieser bekannten Anordnung handelt es sich um eine stationäre Leseeinrichtung, an der der abzutastende Träger unter stets gleichen Bedingungen in Bezug auf Abstand, Neigungswinkel und Abtastrichtung vorbeigeführt wird.

Derartige »Ideal«-Bedingungen sind bei manuell über den abzutastenden Aufzeichnungsträger geführten Handlesegeräten naturgemäß kaum einzuhalten. Hier muß vielmehr davon ausgegangen werden, daß das Handgerät zwischendurch auch in einem unregelmäßigen Abstand zum Abtastobjekt und in einer mehr oder weniger geneigten bzw. verkanteten Stellung gehandhabt wird. Im Vergleich zu den bei stationären Leseeinrichtungen üblicherweise verwendeten und dort völlig ausreichenden Regeleinrichtungen wird es deshalb hier unbedingt erforderlich, die Intensität der Beleuchtung des Abtastfeldes auf dem Aufzeichnungsträger ständig an die wechselnden Abtastverhältnisse anzupassen. In diesem Zusammenhang ist aus der deutschen Patentschrift 1 917 006 (entspricht der LU-A-60 634) ein elektrooptischer Regelkreis zum Regeln der Lichtpunktintensität einer Kathodenstrahlröhre bekannt. Kathodenstrahlröhren wurden in früheren Jahren häufiger als Lichtpunktabtaster verwendet, weil sie es erlauben, einen auf den Schirm der Kathodenstrahlröhre scharf fokussierten Lichtpunkt in mindestens einer Richtung leicht abzulenken. Dieser Lichtpunkt wird durch ein Objektiv auf das Abtastfeld des Aufzeichnungsträgers als Bildebene abgebildet. Das von dort reflektierte Licht wird mit sehr lichtempfindlichen fotoelektrischen Wandlern, z. B. Sekundärelektronenvervielfachern in elektrische Bildsignale umgesetzt.

Diese Lichtpunktabtaster werden heute kaum mehr angewendet. Die Kathodenstrahlröhre bedingt ein großes Raumvolumen, ist nur eine sehr schwache Lichtquelle und benötigt deshalb sehr lichtempfindliche fotoelektrische Elemente, deren unterschiedliche Empfindlichkeit bei verschiedenen Lichteinfallswinkeln des aus dem Abtastfeld remittierten Lichtes zudem das Abtastergebnis verfälschen.

Bei dem bekannten elektrooptischen Regelkreis werden einerseits die Einflüsse des unterschiedlichen Reflexionsvermögens der einzelnen Aufzeichnungsträger kompensiert und andererseits davon getrennt die Modulation der Bildsignale, die auf die unterschiedlichen Einfallswinkel des reflektierten Lichtes zurückzuführen ist, eliminiert. Dafür ist ein eigener Regelkreis vorgesehen. Teil dieses Regelkreises ist ein zweites Paar von Sekundärelektronenvervielfachern, die nicht auf das Abtastfeld, sondern den Schirm der Kathodenstrahlröhre ausgerichtet sind. Der gemeinsame Ausgang dieses zweiten Wandlerpaares ist an eine Regelschaltung angeschlossen, in der aus dem gemeinsamen Wandlersignal durch Vergleich mit einer Referenzspannung ein Signal zum Steuern der Strahldichte der Kathodenstrahlröhre so abgeleitet wird, daß das zweite Wandlerpaar ein möglichst der Referenzspannung angeglichenes Signal abgibt.

Bei Zeichenerkennungsgeräten mit automatischem Belegtransport sind daher Lichtpunktabtaster als bekannt vorauszusetzen, die zusätzliche fotoelektrische Wandler aufweisen, um eine Stellgröße in einem Regelkreis zu erzeugen, der dazu dient, die Intensität des Lichtpunktes auf dem Schirm der Kathodenstrahlröhre so auszusteuern, daß unterschiedliche Lichteinfallswinkel des remittierten Lichtes auf den das Abtastfeld des Aufzeichnungsträgers abtastenden fotoelektrischen Wandlern ausgeglichen werden.

Das Prinzip des Lichtpunktabtasters mit seinem einzigen ausgelenkten Lichtstrahl erfordert ein ganz anderes Abtastverfahren als eine Abtasteinrichtung gemäß dem Oberbegriff. Darüber hinaus ist der in diesem Zusammenhang bekannte Regelkreis auch in seinem prinzipiellen Aufbau gerade auch für möglichst kostengünstige, peripher einzusetzende Zeichenerkennungsgeräte viel zu aufwendig. Denn bei der bekannten Einrichtung ist gerade von der Überlegung ausgegangen, die gesamte Anordnung zur fotoelektrischen Wandlung des Abtastsignals zu verdoppeln, um einen getrennten Regelkreis zu schaffen.

Ausgehend von den vorstehenden Überlegungen und dem bekannten Stand der Technik liegt der Erfindung die Aufgabe zugrunde, eine Einrichtung der eingangs genannten Art zu schaffen, mit der es ohne großen Aufwand möglich ist, die durch schwankenden Remissionsgrad des Aufzeichnungsträgers und durch wechselnden Abstand des Aufzeichnungsträgers von der Lichtquelle hervorgerufene unerwünschte Information im Abtastsignal durch Regelung der Intensität der Belichtung zu beseitigen. Diese Aufgabe wird erfindungsgemäß durch die im Kennzeichen des Hauptanspruches beschriebenen Merkmale gelöst.

Der Vorteil einer derart ausgebildeten Regeleinrichtung ergibt sich vor allem dadurch, daß die Regelstöße aus der Summe aller Einzelströme der in einer Sensorfläche räumlich verteilten Fotoelemente gewonnen wird, so daß auch bei unterschiedlichsten Abtastbedingungen eine verbesserte Regelung der jeweils erforderlichen Lichtintensität möglich ist.

Vorteilhafte Weiterbildungen der Erfindung sind in den Unteransprüchen angegeben.

Ein Ausführungsbeispiel der Erfindung wird im folgenden anhand der Zeichnung näher erläutert. Dabei zeigt

Fig. 1 ein Blockschaltbild einer erfindungsgemäß ausgebildeter Einrichtung zum Abtasten von Mustern mit einer geregelten Lichtquelle zur Darstellung des Prinzips und

Fig. 2 die detaillierte Schaltungsanordnung des Regelkreises.

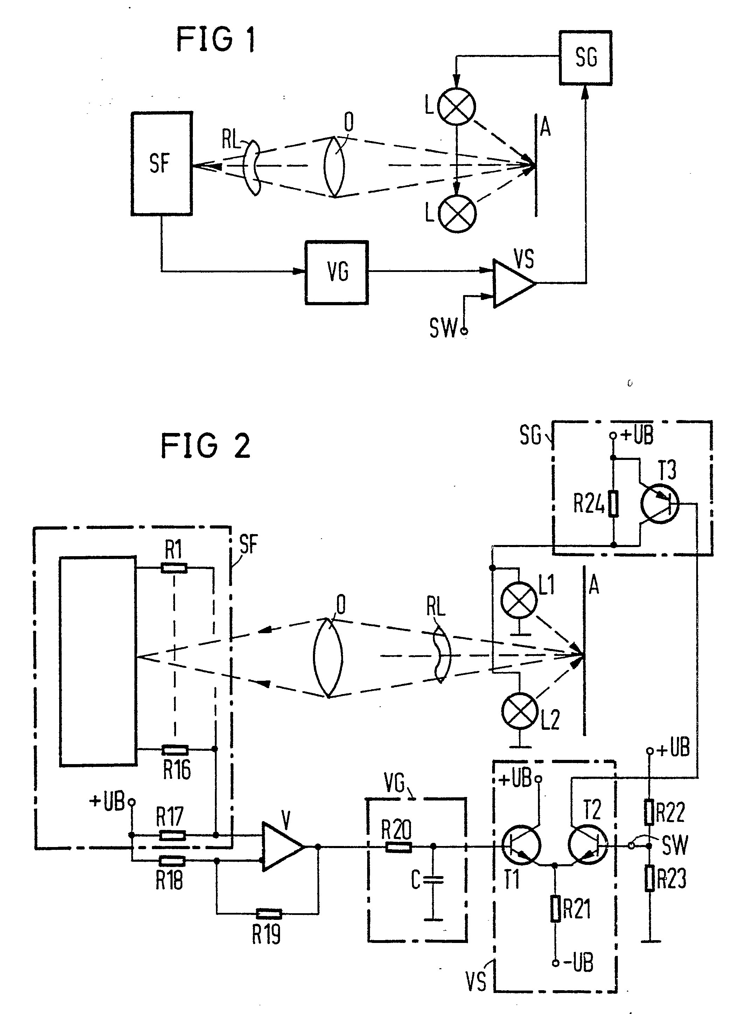

In Fig. 1 ist schematisch ein Aufzeichnungsträger A dargestellt, vor dem in einer parallelen Ebene zwei Lampen L so angeordnet sind, daß sie ein begrenztes Abtastfeld auf dem Aufzeichnungsträger A etwa unter 45° beleuchten. Das davon remittierte Licht RL fällt über ein Objektiv O gerichtet auf eine Sensorfläche SF, d. h. es ist damit das Abtastfeld auf der Sensorfläche SF abgebildet. Diese besteht aus einer Mehrzahl von fotoelektrischen Elementen, die in einer Zeile oder in Form einer Matrix angeordnet sein können.

Die von der Sensorfläche SF empfangene und in elektrische Signale umgewandelte Helligkeit wird als Meßgröße einem Verzögerungsglied VG zugeführt, das der Trennung der sich schnell ändernden erwünschten Zeicheninformation von den unerwünschten Störfaktoren dient. Die so geformte Meßgröße wird einer Vergleichsschaltung VS zugeführt und dort mit einem Sollwert SW verglichen. Das Ausgangssignal der Vergleichsschaltung VS bildet dann eine Stellgröße, die einem Stellglied SG zugeführt wird, das abhängig von der steuernden Eingangsgröße über die Betriebsspannung der Lampen L deren Helligkeit reguliert. Der Regelkreis schließt sich über den optischen Weg des von den Lampen L auf das Abtastfeld des Aufzeichnungsträgers A ausgestrahlten und von diesem auf die Sensorfläche SF remittierten Lichtes RL.

In Fig. 2 ist eine detaillierte Schaltungsanordnung für diesen anhand von Fig. 1 im Prinzip beschriebenen Regelkreis dargestellt. In der fotoempfindlichen Sensorfläche SF wird das örtlich auftreffende remittierte Licht RL in proportionale Ströme umgewandelt, die über je einem oder auch mehreren fotoempfindlichen Elementen zugeordnete Arbeitswiderstände R1 bis R16 aus einer positiven Spannungsquelle +UB in den fotoelektrischen Wandler hineinfließen. Zwischen einem gemeinsamen Verbindungspunkt der Widerstände R1 bis R16 und dieser positiven Spannungsquelle +UB ist ein weiterer ohmscher Widerstand R17 als Abschlußwiderstand angeordnet, der von der Summe der Fotoströme durchflossen wird. Der Spannungsabfall an diesem Abschlußwiderstand R17 bildet die Meßgröße für den Regelkreis.

Parallel zu diesem Widerstand R17 ist an die positive Spannungsquelle +UB ein weiterer ohmscher Widerstand R18 geschaltet. Beide Widerstände R17, R18 sind andererseits an je einen Eingang eines Verstärkers V angeschlossen, in dessen Rückkopplungszweig ein weiterer ohmscher Widerstand R19 angeordnet ist. In diesem Verstärker wird die als Spannungsabfall am Widerstand R17 auftretende Meßgröße im Verhältnis des Rückkopplungswiderstandes R19 zu dem Eingangswiderstand R18 verstärkt. Die so verstärkte Meßgröße wird dem Verzögerungsglied VG zugeführt, das als Tiefpaß ausgebildet ist und einen weiteren ohmschen Widerstand R20 als Längswiderstand und einen einseitig an Masse liegenden Ableitkondensator C besitzt. Dabei ist es so dimensioniert, daß alle hochfrequenten Anteile der verstärkten Meßgröße ausgefiltert werden und nur ihre niederfrequenten, den Störfaktoren zuzuordnenden Teile weiter verarbeitet werden.

Diese gefilterte Meßgröße wird der Vergleichsschaltung VS zugeführt. Sie ist als Differenzverstärker ausgebildet und enthält zwei Transistoren T1 bzw. T2, deren Emitter gemeinsam über einen gemeinsamen Emitterwiderstand R21 an einer negativen Spannungsquelle – UB liegen. Der erste Transistor T1 ist mit seiner Basis an den Ausgang des Verzögerungsgliedes VG und mit seinem Kollektor an die positive Spannungsquelle +UB angeschlossen. Der Basis des zweiten Transistors T2 wird als Vergleichswert ein Sollwert SW zugeführt. Dieser Sollwert wird mit einem fest eingestellten Spannungsteiler, bestehend aus zwei weiteren ohmschen Widerständen R22 und R23 erzeugt, die zwischen der positiven Spannungsquelle +UB und Masse liegen. Der Kollektor des zweiten Transistors T2 bildet den Ausgang der Vergleichsschaltung VS.

Der Ausgang der Vergleichsschaltung VS ist an den Steuereingang des Stellgliedes SG angeschlossen. Es besteht aus einem weiteren Transistor T3, dessen Basis an den Ausgang der Vergleichsschaltung VS angeschlossen ist. Parallel zu seiner Emitter-Kollektor-Strecke liegt ein weiterer ohmscher Widerstand R24, der einerseits ebenfalls an die positive Spannungsquelle +UB und andererseits an den Ausgang des Stellgliedes angeschlossen ist. Dieser Ausgang schließlich ist parallel mit den beiden Lampen L1 bzw. L2 verbunden, die andererseits an Masse liegen. Der Transistor T3 des Stellgliedes SG wird entsprechend dem seiner Basis zugeführten Steuersignal ausgesteuert und damit der aus der positiven Spannungsquelle +UB gelieferte Strom für die Lampen L1 bzw. L2 begrenzt.

## Patentansprüche

1. Einrichtung zum Abtasten von Mustern mit einer Lichtquelle (L1, L2), die auf einem Aufzeichnungsträger (A) ein Abtastfeld beleuchtet und mit einer aus einer Mehrzahl von fotoelektrischen Elementen gebildeten Sensorfläche (SF) zum Umwandeln des von dem Abtastfeld über ein Objekt (O) empfangenen remittierten Lichtes (RL) in analoge elektrische Bildsignale, bei der der von der Lichtquelle (L1, L2) abgegebene Lichtstrom zum Ausgleichen von Störfaktoren automatisch nachgeregelt wird, dadurch gekennzeichnet, daß die Fotoelemente der Sensorfläche (SF) mit Arbeitswiderständen (R1 bis R16) verbunden sind, die einerseits über einen gemeinsamen, der Summierung der Einzelströme dienenden Abschlußwiderstand (R17) an einer Spannungsquelle (+UB) liegen und andererseits an einen Eingang eines Differenzverstärkers (V) angeschlossen sind, daß am zweiten Eingang dieses Differenzverstärkers (V) ein parallel zum Abschlußwiderstand (R17) geschalteter zweiter ohmscher Eingangswiderstand (R18) und ein auch mit dem Verstärkerausgang verbundener Rückkopplungswiderstand (R19) angeschlossen sind, so daß sich am Ausgang des Verstärkers ein im Verhältnis des Rückkopplungswiderstandes (R19) zum zweiten Eingangswiderstand (R18) verstärktes Summensignal ergibt und daß dem Ausgang des Differenzverstärkers (V) ein als Tiefpaß ausgebildetes Verzögerungsglied (VG) zum Unterdrücken der sich schnell ändernden Zeicheninformation zur Gewinnung des erforderlichen Regelungssignals angeschaltet ist.

2. Einrichtung nach Anspruch 1, dadurch gekennzeichnet, daß das Verzögerungsglied (VG) als Tiefpaß mit einem im Längszweig liegenden ohmschen Widerstand (R20) und einem im Querzweig liegenden Ableitkondensator (C) ausgebildet ist.

3. Einrichtung nach Anspruch 1 oder 2, gekennzeichnet durch die Ausbildung als ein manuell über die abzutastende Fläche eines Aufzeichnungsträgers (A) bewegbares Handlesegerät.

## Claims

1. A scanning pattern device comprising a light source (L1, L2) which illuminates a scanning field on a data carrier (A), and a sensor surface (SF) composed of a plurality of photo-electric elements which serve to convert reflected light (RL) received at the scanning field via an objective lens (O) into analogue electrical image signals, the light emitted by the light source (L1, L2) being automatically readjusted to compensate for interference factors, characterised in that the photo-elements of the sensor surface (SF) are connected to load resistors (R1 to R16) which each have one side connected to a voltage source (+UB) via a common terminal resistor (R17) which serves to sum up the individual currents, and each have their other side connected to an input of a differential amplifier (V), a second input resistor (R18) being connected parallel to the terminal resistor (R17) to the second input of the differential amplifier (V) together with a feedback resistor (R19) connected from the amplifier output so that at the output of the amplifier a summation signal which is amplified by the ratio of the feedback resistance (R19) to the second input resistance (R18), and the output of the differential amplifier (V) is connected to a delay element (VG) which is a low-pass filter and serves to suppress the rapidly changing signal information for obtaining the requisite regulation signal.

2. A device as claimed in claim 1, characterised in that the delay element (VG) is a low-pass filter comprising a resistor (R20) which lies in the longitudinal arm and a discharge capacitor (C) which lies in the transverse arm.

3. A device as claimed in claim 1 or 2, characterised in that the design forms a hand-operated reading apparatus which can be manualy moved over the surface of a data carrier which is to be scanned.

## Revendications

1. Dispositif pour balayer des motifs avec une source lumineuse (L1, L2) qui éclaire une plage de balayage d'un support d'enregistrement (A), et avec une surface de détection (SF), formée par plusieurs éléments photoélectriques, pour transformer en signaux d'images électriques sous forme analogique, du type dans lequel le flux lumineux émis par la source lumineuse (L1, L2) est régulé automatiquement pour compenser des facteurs de perturbation, caractérisé par le fait que les éléments photoélectriques de la surface de détection (SF) sont reliés à des résistances de charge (R1 à R16) qui sont reliées, d'une part, par l'intermédiaire d'une résistance terminale (R17) qui sert à la sommation des courants individuels, à une source de tension (+UB) et, d'autre part, à l'entrée d'un amplificateur différentiel (V), qu'à la seconde entrée de cet amplificateur différentiel (V) sont reliées une seconde résistance ohmique d'entrée (R18) montée en parallèle sur la résistance de sortie (R17), ainsi qu'une résistance de contre-réaction (R19) également reliée à la sortie de l'amplificateur, en sorte qu'il un résulte à la sortie de l'amplificateur un signal de sommation amplifié dont le rapport entre la résistance de contre-réaction (R19) et la seconde résistance d'entrée (R18), et qu'à la sortie de l'amplificateur différentiel (V) est relié un élément de retard (VG) sous la forme d'un passe-bas, pour supprimer des informations de signes variant rapidement, en vue d'obtenir le signal de régulation nécessaire.

2. Dispositif selon la revendication 1, caractérisé par le fait que l'élément à retard (VG) est réalisé sous la forme d'un passe-bas ayant une résistance ohmique (R20) dans la branche longitudinale et un condensateur en dérivation (C) dans la branche transversale.

3. Dispositif selon la revendication 1 ou 2, caractérisé par sa réalisation sous la forme d'un appareil de lecture transportable déplaçable à la main sur la surface à blayaer d'un support d'enregistrement (A).

# FIG 1

# FIG 2